## Europäisches Patentamt
## European Patent Office
## Office européen des brevets

(19)

(11) Numéro de publication: **0 078 721**
**B1**

(12)

# FASCICULE DE BREVET EUROPEEN

(45) Date de publication du fascicule du brevet:
17.04.85

(51) Int. Cl.⁴: **F 15 B 1/047,** F 16 L 55/04, F 16 F 9/08

(21) Numéro de dépôt: **82401817.0**

(22) Date de dépôt: **05.10.82**

(54) Amortisseur hydropneumatique.

(30) Priorité: 30.10.81 FR 8120473

(43) Date de publication de la demande:
11.05.83 Bulletin 83/19

(45) Mention de la délivrance du brevet:
17.04.85 Bulletin 85/16

(84) Etats contractants désignés:
AT BE CH DE GB IT LI LU NL SE

(56) Documents cités.
DE - A - 1 475 653
DE - A - 1 600 449
DE - A - 2 628 880
FR - A - 1 438 133
FR - A - 1 504 515
FR - A - 2 319 037
FR - A - 2 443 622
GB - A - 1 108 551
US - A - 4 287 916

(73) Titulaire: **DOSAPRO MILTON ROY, Société dite:,**
**F-27360 Pont Saint Pierre (FR)**

(72) Inventeur: **Malizard, Max, 13, rue Le Long des Bois,**
**F-78690 Saint Remy-l'Honore (FR)**

(74) Mandataire: **Robert, Jean-Pierre et al, CABINET BEAU**
**DE LOMENIE 55, rue d'Amsterdam, F-75008 Paris (FR)**

## Description

Le principe des amortisseurs hydropneumatiques, destinés à amortir les variations de pression et de débit dans une installation hydraulique, consiste essentiellement à mettre en équilibre de pression un gaz compressible et le fluide hydraulique dans une capacité de volume fermé.

On sait que pour éviter une dissolution de gaz dans le liquide et pour permettre une précompression du gaz en l'absence de pression hydraulique il faut disposer entre le gaz et le liquide une paroi souple et déformable de séparation et de contention du gaz.

On connaît deux formes principales de réalisation de cette paroi souple, à savoir une forme dite »en vessie« et une forme dite »en diaphragme«. Dans le type à vessie, l'amortisseur est formé d'un réservoir métallique de forme cylindrique terminé par deux calottes sensiblement sphériques dans lequel est introduite une vessie épousant à l'état libre la forme dudit réservoir. La calotte supérieure comporte un raccord de montage du col de la vessie permettant son gonflage au moyen d'une valve; la partie inférieure comporte un raccord de communication avec le liquide du circuit ainsi qu'un système de grille ou de valve limitant la course de la vessie vers le bas dans le cas où sa pression de gonflage se trouve supérieure à celle du circuit.

Ce dispositif, pouvant être prégonflé à une pression convenable avant son raccordement au circuit, présente l'inconvénient de ne pas convenir en cas de liquides chargés qui risquent d'obstruer le système de communication avec le circuit et de détériorer la vessie. En outre, en cas d'insuffisance de gonflage ou de fuite de gaz, la vessie est refoulée vers le haut où n'existe aucun système de butée, de sorte qu'elle subit une déformation excessive pouvant entraîner sa destruction. Enfin, même en service normal, les déformations nécessaires au fonctionnement exigent une membrane souple possédant une bonne résistance à la flexion, ce qui implique l'utilisation de matériaux du type élastomère dont la tenue chimique est insuffisante pour certaines applications.

Dans le type à diaphragme, le réservoir est formé de deux coquilles métalliques symétriques et la membrane séparatrice épouse sensiblement à l'état libre la forme intérieure des coquilles; elle est fixée de façon étanche par sa périphérie dans plan de joint des coquilles. La coquille supérieure comporte le dispositif de gonflage et la coquille inférieure, le raccordement au circuit et une grille ou in dispositif de clapet équivalent empêchant l'extrusion de la membrane. Ce dispositif présente sur le précédent l'avantage d'une moindre fatigue mécanique de la membrane et d'une meilleure protection contre les avaries en cas de fuite de gaz ou de surpression. Il conserve toutefois l'inconvénient de l'obstruction du système de butée en cas de liquide chargé.

En outre, il faut noter qu'il est souvent avantageux, pour obtenir le meilleur amortissement possible, de disposer d'un volume de gaz nettement supérieur à celui correspondant au débattement maximal de la membrane qui est inférieur au volume intérieur des coquilles. Il est alors nécessaire d'associer aux amortisseurs connus des capacités de gaz auxiliaires au moyen de tuyauteries et de raccords, ce qui augmente les risques de fuite, l'encombrement et le prix des appareils.

La présente invention entend remédier à ces inconvénients en proposant un amortisseur hydropneumatique de fabrication simple, mettant en œuvre une membrane séparatrice du type diaphragme équipée de moyens permettant de limiter les déformations possibles de la membrane tant sous l'effet d'une fuite de gaz ou d'une surpression que sous l'effet du gonflage à pression hydraulique nulle, ces moyens permettant d'associer de manière simple une capacité auxiliaire de gaz en communication directe avec la chambre pneumatique de l'amortisseur, capacité de volume ajustable à la demande.

A cet effet, l'invention a donc pour objet un amortisseur hydropneumatique constitué par une enceinte partagée en deux chambres étanches l'une de l'autre par une membrane déformable, l'une des chambres possédant un conduit de raccordement à une installation hydraulique, l'autre chambre possédant un conduit de raccordement à une capacité auxiliaire de gaz.

Selon l'une des caractéristiques de l'invention, la membrane séparatrice susdite est équipée en son centre d'une pièce rapportée comportant deux parties symétriques par rapport à la membrane, de formes sensiblement tronconiques, tandis que les deux conduits susdits débouchent dans leur chambre respective par une portion évasée, sensiblement tronconique, de même conicité que les parties susdites, lesdites portions et parties tronconiques étant axialement alignées.

De manière préférée, chacune des parties tronconiques de la pièce susdite est prolongée axialement par une protubérance de centrage.

Dans un mode avantageux de réalisation, ladite membrane est pourvue en son centre d'un orifice dont le bord annulaire est sensiblement plan et comporte sur chacune de ses faces un bourrelet sensiblement semi-torique tandis que les deux parties de la pièce susdite comportent deux faces planes en regard l'une de l'autre, chacune d'elles étant pourvue d'une gorge semi-torique pour recevoir ledit bourrelet, l'une desdites parties formant vis pour être attelée à l'autre formant écrou au travers de l'orifice de la membrane en pinçant entre elles ledit bourrelet.

En outre, l'une desdites parties possède un épaulement radial de butée de l'autre partie, distant de sa face plana d'une valeur sensiblement égale à l'épaisseur du bord plan de la membrane.

Par ailleurs, ladite membrane est en caoutchouc, recouverte sur sa face tournée vers la chambre hydraulique d'une couche de matière plastique et comporte un bord annulaire extérieur sensiblement plan pourvu de bourrelets semi-toriques de fixation à l'enceinte.

La partie centrale de la membrane s'étendant entre les deux bords plans susdits affecte à l'état libre une forme sensiblement torique.

Enfin l'amortisseur selon l'invention sera avantageusement constitué par deux demi-coquilles entre lesquelles sont pincés les bourrelets extérieurs de la membrane, ledit conduit de raccordement à la capacité auxiliaire étant constitué par un orifice traversant l'une des demi-coquilles, ladite capacité étant constituée par une virole entourant ledit orifice et coopérant de manière étanche avec un fond par l'une de ses extrémités et ladite demi-coquille par son autre extrémité, ledit fond et l'autre demi-coquille comportant des moyens de bridage de l'ensemble ainsi empilé.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés, dans lesquels:

la figure 1 est une vue schématique en coupe de l'appareil selon l'invention;

la figure 2 illustre par une coupe un mode de réalisation préféré du centre de la membrane de l'amortisseur selon l'invention.

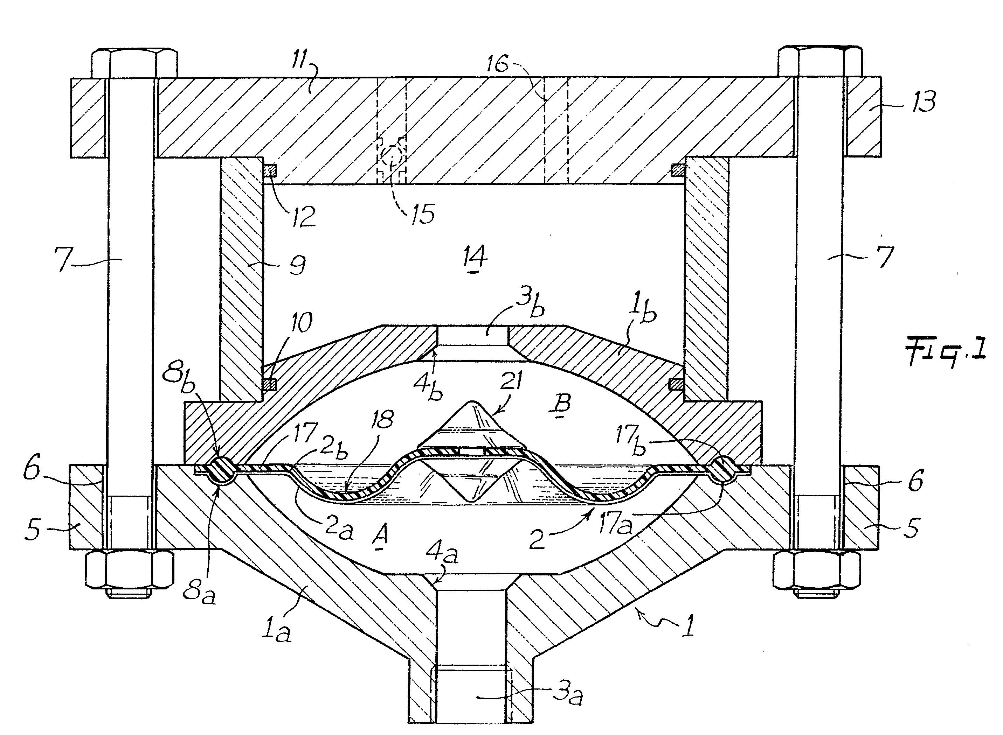

En se reportant à la figure 1, on voit une enceinte 1 constituée par deux demi-coquilles 1a et 1b limitant un volume intérieur. Une membrane séparatrice 2 devise ce volume intérieur en deux chambres A et B, la chambre A étant la chambre hydraulique, la chambre B étant la chambre pneumatique de l'amortisseur. La coquille inférieure 1a présente à sa partie inférieure un orifice fileté 3a pour son raccordement à une installation hydraulique non représentée. Le débouché du conduit 3a dans la chambre A est conformé en une partie évasée formant portée conique 4a qui se raccorde avec la paroi intérieure de la demi-coquille 1a. Cette demi-coquille présente, en une seule pièce, une bride extérieure 5 pourvue de trous 6 pour le passage de tirants d'assemblage 7. La demi-coquille 1a comporte également dans sa face d'appui sur la demi-coquille 1b une gorge 8a semi-torique.

La demi-coquille supérieure 1b est de forme intérieure symétrique à celle de la coquille 1a. Elle comporte également un orifice 3b, débouchant dans la chambre B au travers d'une portée 4b, cet orifice étant l'extrémité d'un conduit de raccordement de la chambre B à une capacité auxiliaire de gaz décrite plus en détail ci-après. En outre, sa face d'appui sur la coquille 1a comporte également une gorge 8b semi-torique.

La demi-coquille 1b est coiffée par une virole 9, de manière étanche au moyen d'un joint torique 10. Cette virole est fermée à son autre extrémité par un fond 11 comportant également un joint torique 12. Ce fond, bordé d'une bride 13, est maintenu plaqué sur la virole 9, qui joue le tôle d'une entretoise, prenant appui sur la demi-coquille 1b et la plaquant sur la demi-coquille 1a au moyen des tirants 7.

Le volume intérieur 14 de la virole constitue la capacité auxiliaire de gaz en communication avec la chambre B par l'orifice 3b et susceptible d'être gonflée au travers d'une valve 15. Un conduit 16 peut servir à l'implantation d'un manomètre.

La membrane séparatrice 2 est, dans la réalisation décrite, composite, constituée par une couche 2b (la plus épaisse) du côté de la chambre B en caoutchouc (synthétique ou naturel) et une couche 2a (la plus mince) du côté de la chambre A en matière plastique notamment du tétrafluoréthylène. La proportion en épaisseur des deux constituants est environ 4/5, 1/5.

Cette membrane comporte une portion annulaire périphérique sensiblement plane 17. Chaque face de ce rebord comporte un bourrelet 17a, 17b constitué par un demi-tore dont le rayon est de l'ordre de l'épaisseur de la membrane. On aura noté sur cette figure que l'une au moins des faces d'appui mutuel des demi-coquilles 1a, 1b comporte une sorte de lamage de profondeur sensiblement égale à l'épaisseur de la membrane. Par ailleurs, les gorges 8a et 8b sont de dimensions telles que, lorsque les deux coquilles sont plaquées l'une sur l'autre, l'écrasement des bourrelets 17a, 17b n'excède pas 20% de l'épaisseur de la membrane à leur endroit. Ainsi la membrane est encastrée entre les demi-coquilles 1a, 1b uniquement au niveau des bourrelets 17a, 17b qui coopèrent avec les gorges 8a, 8b à la manière de joints toriques pour assurer l'étanchéité entre les chambres A et B. On permet ainsi d'assurer une plus grande longévité à la membrane qui est moins sollicitée au niveau de son ancrage.

En direction du centre, ladite membrane comporte une partie 18 de forme sensiblement torique, à l'état libre. Le rayon de cette partie torique est tel que la longueur totale de la section méridienne de la membrane soit égale à la longueur totale de la section méridienne intérieure de l'une des demi-coquilles 1a, 1b. On notera par ailleurs que la forme (en calotte sphérique par exemple) des parois intérieurs de l'enceinte 1 est telle que la flèche de la membrane n'excède pas 10 à 15% de son diamètre utile.

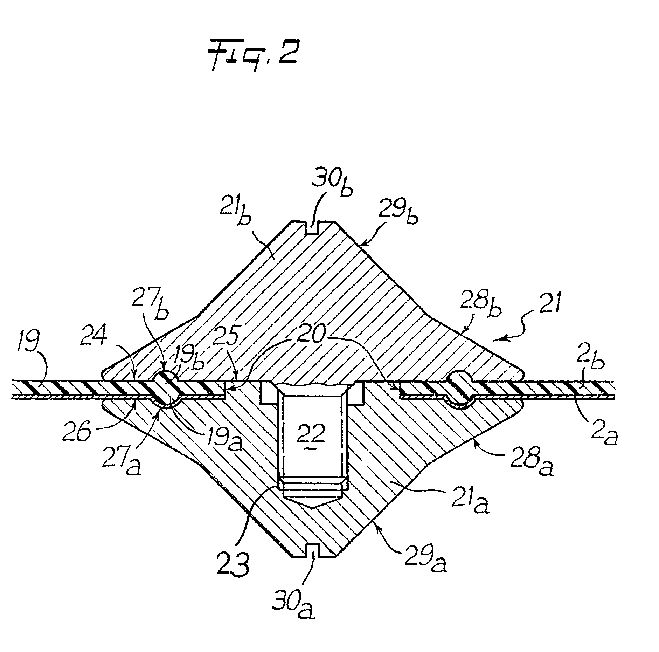

Enfin, comme le montre plus clairement la figure 2, la partie 18 susdite est prolongée au centre une couronne annulaire plane 19 elle-même pourvue de bourrelets 19a, 19b identiques aux bourrelets 17a, 17b, cette couronne bordant un orifice centrale 20.

Une pièce métallique 21 est fixée en son centre à la membrane 2. Elle est constituée de deux parties symétriques 21a, 21b dont l'une porte une vis 22 et l'autre est conformée en écrou 23. La coopération vis-écrou se réalise au travers de l'orifice 20. La partie 21b possède une face radiale 24 d'appui coopérant avec un épaulement radial 25 de la partie 21a. Une sorte de lamage de face radiale 26 est ménagée dans la partie 21a de manière que cette face 26 soit distante dudit épaulement d'une valeur égale à l'épaisseur de la membrane. Des gorges semi-toriques 27a et 27b sont ménagées dans lesdites faces 24 et 26 et coopèrent avec les bourrelets 19a et 19b de la même manière que les gorges 8a, 8b coopèrent avec les bourrelets 17a, 17b, lorsque les deux parties 21a et 21b sont vissées l'une dans l'autre.

Chacune de ces parties comporte une surface extérieure tronconique 28a, 28b d'angle au sommet d'environ 120° prolongée d'une surface extérieure tronconique également 29a, 29b d'angle au sommet d'environ 90° enveloppant une protubérance de centrage de la pièce 21. Ainsi, les portées 4a et 4b susdites étant de même conicité que les surfaces 28a, 28b, lorsque la membrane se plaque contre les parois internes de l'enceinte 1, lesdites surfaces portent sur les parties susdites. Dans ces conditions, la membrane s'appuie entièrement sur la paroi en travaillant uniquement en flexion, sans risque d'allongement ni d'extrusion quelle que soit la pression différentielle qui la sollicite vers l'extérieur de l'enceinte.

Enfin, on notera la présence de fentes 30a, 30b aux sommets de la pièce 21 pour en assurer le montage et démontage.

Le fonctionnement d'un tel dispositif est bien connu et se résume à une succession de remplissage et de vidange partiels de la partie inférieure de la capacité avec déformation de la membrane: il en résulte des variations de pression du gaz qui dépendent du rapport entre les volumes extrêmes correspondants.

Sans entrer dans le détail, on rappellera seulement qu'en fonctionnement normal la cylindrée à absorber doit être inférieure au débattement de la membrane entre ses butées et que la position moyenne de la membrane dépend de la pression de prégonflage et du volume total, y compris celui de la capacité auxiliaire. En général, la capacité d'amortissement est d'autant meilleure que le volume de gaz est plus grand; mais, en contrepartie, les variations acceptables de la pression moyenne sont d'autant plus réduites. Il y a donc dans chaque cas de circuit et de fonctionnement un compromis à trouver entre ces différents facteurs. Le calcul et l'expérience montrent que, dans la majorité des cas, les amortisseurs à vessie ou à membrane, sous leur forme habituelle, ne permettent pas d'obtenir ce compromis sans un surdimensionnement considérable se traduisant par un prix et un encombrement élevés. Par contre, une capacité auxiliaire de l'ordre du débattement total de la membrane représente un compromis satisfaisant dans beaucoup d'applications.

La capacité auxiliaire 14 selon l'invention peut être d'un volume aisément modifiable. On peut en effet remplacer la virole 9 par une virole plus longue ou plus courte. En variante, on peut livrer une capacité solidaire de la demi-coquille 1b en soudant la virole 9 au fond 11 et à ladite coquille.

On peut également concevoir l'amortisseur selon l'invention constitué par deux demi-coquilles identiques à celle 1a avec leur bride 5, la capacité d'air étant alors raccordée par vissage de la même manière que le circuit hydraulique.

La forme spéciale de la butée, solidaire de la membrane qui dégage complètement un large orifice en position de travail et l'obture complètement en fin de course, permet l'emploi de l'appareil avec des liquides chargés sans les risques d'obstruction et de dépôts intérieurs des dispositifs connus. Le prégonflage à l'air libre ou sur circuit sans pression est également possible. L'étanchéité, assurée du côté de la chambre pneumatique par le clapet 21 sur la portée 4b, permet la protection de la membrane contre les fuites de gaz ou les surpressions du circuit hydraulique qui sont nuisibles aux amortisseurs à vessie. Elle permet d'utiliser toute la course de débattement en laissant un volume résiduel favorable à l'amortissement, ce qui est impossible dans les amortisseurs à vessie ou à membrane classiques, et ce, sans risque pour la membrane dans tous les cas de fonctionnement, même en dehors des limites normalement prévues.

L'invention trouve une application intéressante dans le domaine de la construction mécanique.

## Revendications

1. Amortisseur hydropneumatique constitué par une enceinte (1) partagée en deux chambres (A, B) étanches l'une de l'autre par une membrane (2) déformable, l'une des chambres (A) possédant un conduit (3a) de raccordement à une installation hydraulique, l'autre chambre (B) possédant un conduit de raccordement (3b) à une capacité (14) auxiliaire de gaz, caractérisé en ce que la membrane (2) séparatrice susdite est équipée en son centre d'une pièce rapportée (21) comportant deux parties (21a, 21b) symétriques par rapport à la membrane (2), de formes sensiblement tronconiques, et en ce que les deux conduits (3a, 3b) susdits débouchent dans leur chambre respective par une portion évasée (4a, 4b), sensiblement tronconique, de même conicité que les parties (21a, 21b) susdites, lesdites portions et parties tronconiques étant axialement alignées.

2. Amortisseur selon la revendication 1, caractérisé en ce que chacune des parties tronconiques (21a, 21b) de la pièce (21) susdite est prolongée axialement par une protubérance (29a, 29b) de centrage.

3. Amortisseur selon la revendication 1 ou la revendication 2, caractérisé en ce que ladite membrane (2) est pourvue, en son centre, d'un orifice (20) dont le bord annulaire (19) est sensiblement plan et comporte sur chacune de ses faces un bourrelet (19a, 19b) sensiblement semitorique tandis que les deux parties (21a, 21b) de la pièce susdite comportent deux faces planes (24, 26) en regard l'une de l'autre, chacune d'elles étant pourvue d'une gorge (27a, 27b) semi-torique pour recevoir ledit bourrelet (19a, 19b), l'une desdites parties formant vis pour être attelée à l'autre formant écrou au travers de l'orifice (20) de la membrane en pinçant entre elles lesdits bourrelets.

4. Amortisseur selon la revendication 3, caractérisé en ce que l'une desdites parties (21a) possède un épaulement (25) radial de butée de l'autre partie (21b), distant de sa face plane (26) d'une valeur sensiblement égale à l'épaisseur du bord plan de la membrane (2).

5. Amortisseur selon l'une quelconque des revendications 3 et 4, caractérisé en ce que la membrane comporte un bord extérieur annulaire (17) sensiblement plan pourvu de bourrelets (17a, 17b) de fixation à l'enceinte (1).

6. Amortisseur selon la revendication 5, caractérisé en ce que la membrane (2) susdite est en caoutchouc (2b) recouverte sur sa face tournée vers la chambre hydraulique (A) d'une couche de matière plastique (2a).

7. Amortisseur selon la revendication 5 ou la revendication 6, caractérisé en ce que les deux portions planes (17 et 19) — interne et externe — de la membrane (2) sont reliées par une portion (18) de membrane sensiblement torique à l'état libre.

8. Amortisseur selon l'une quelconque des revendications précédentes, caractérisé en ce que l'enceinte (1) est constituée par deux demi-coquilles (1a, 1b) entre lesquelles sont pincés les bourrelets (17a, 17b) extérieurs de la membrane (2), ledit conduit (3b) de raccordement à la capacité auxiliaire (14) étant constitué par un orifice traversant l'une des demi-coquilles (1b), ladite capacité (14) étant constituée par une virole (9) entourant ledit orifice et coopérant de manière étanche avec un fond (11) par l'une de ses extrémités et ladite demi-coquille (1a) par son autre extrémité, ledit fond (11) et l'autre demi-coquille (1a) comportant des moyens (5, 13, 7) de bridage de l'ensemble ainsi empilé.

**Patentansprüche**

1. Hydropneumatischer Stoßdämpfer, bestehend aus einem durch eine verformbare Membran (2) in zwei gegeneinander dichte Kammern (A, B) unterteiltem Gehäuse (1), wobei eine der Kammern (A) eine Verbindungsleitung (3a) zu einer hydraulischen Anlage und die andere Kammer (B) eine Verbindungsleitung (3b) zu einer Gas-Hilfskapazität (14) besitzt, dadurch gekennzeichnet, daß die Trennmembran (2) in ihrem Mittelteil mit einem Einsatzstück (21) versehen ist, das zwei in bezug auf die Membran (2) symmetrische Teile (21a, 21b) von im wesentlichen kegelstumpfartiger Form umfaßt, und daß die beiden Leitungen (3a, 3b) über einen trichterartigen, im wesentlichen kegelstumpfförmigen Abschnitt (4a, 4b) derselben Konizität wie die Teile (21a, 21b) in ihre jeweilige Kammer münden, wobei die kegelstumpfförmigen Abschnitte und Teile axial fluchten.

2. Stoßdämpfer nach Anspruch 1, dadurch gekennzeichnet, daß jeder der kegelstumpfförmigen Teile (21a, 21b) des Stücks (21) axial durch einen Zentriervorsprung (29a, 29b) verlängert ist.

3. Stoßdämpfer nach Anspruch 1 oder 2, dadurch gekennzeichnet, daß die Membran (2) in ihrem Mittelteil mit einer Öffnung (20) versehen ist, deren ringförmiger Rand (19) im wesentlichen eben ist und an jeder Seite einen im wesentlichen halbtorusförmigen Wulst (19a, 19b) umfaßt, wogegen die beiden Teile (21a, 21b) des Einsatzstücks zwei zueinandergerichtete ebene Flächen (24, 26) aufweisen, von denen jede mit einer halbtorusförmigen Kehlung (27a, 27b) zur Aufnahme des Wulstes (19a, 19b) versehen ist, wobei einer der Teile eine Schraube zum Ankuppeln an den anderen, eine Mutter bildenden Teil quer durch die Öffnung (20) der Membran unter Einquetschen der Wülste zwischen den Teilen bildet.

4. Stoßdämpfer nach Anspruch 3, dadurch gekennzeichnet, daß einer der Teile (21a) eine radiale Schulter (25) zum Anschlag des anderen Teils (21b) in Entfernung seiner ebenen Fläche (26) von einem der Dicke des ebenen Randes der Membran (2) im wesentlichen gleichen Wert besitzt.

5. Stoßdämpfer nach einem der Ansprüche 3 und 4, dadurch gekennzeichnet, daß die Membran einen ringförmigen, im wesentlichen ebenen Außenrand (17) umfaßt, welcher mit Wülsten (17a, 17b) zum Fixieren am Gehäuse (1) versehen ist.

6. Stoßdämpfer nach Anspruch 5, dadurch gekennzeichnet, daß die Membran (2) aus Gummi (2b) besteht und auf ihrer, der Hydraulikkammer (A) zugewandten Seite mit einer Schicht aus Plastikmaterial (2a) bedeckt ist.

7. Stoßdämpfer nach Anspruch 4 oder 6, dadurch gekennzeichnet, daß die beiden ebenen Außen- und Innenabschnitte (17 und 19) der Membran (2) über einen im freien Zustand im wesentlichen halbtorusförmigen Abschnitt (18) verbunden sind.

8. Stoßdämpfer nach einem der vorhergehenden Ansprüche, dadurch gekennzeichnet, daß das Gehäuse (1) durch zwei Halbschalen (1a, 1b) gebildet ist, zwischen denen die Außenwülste (17a, 17b) der Membran (2) eingequetscht sind, wobei die Verbindungsleitung (3b) zur zusätzlichen Hilfs-Kapazität (14) aus einer eine der Halbschalen (1b) durchsetzenden Öffnung besteht, welche Kapazität (14) durch einen Reifen (9) gebildet ist, der die Öffnung umgibt und an einem seiner Enden mit einem Boden (11) und an seinem anderen Ende mit der Halbschale (1a) auf dichte Weise zusammenwirkt, wobei der Boden (11) und die andere Halbschale (1a) Mittel (5, 13, 7) zum Festklemmen der so aufgebauten Einheit umfaßt.

## Claims

1. Hydropneumatic shock-absorber constituted by an enclosure (1) divided into two chambers (A, B) insulated one from other by a deformable diaphragm (2), one of said chambers (A) having a conduit (3a) connecting it with a hydraulic installation, the other chamber (B) having a conduit (3b) connecting it with an auxiliary reserve (14) of gas, characterized in that said dividing diaphragm (2) is equipped in its center with a built-on piece (21) comprising two parts (21a, 21b) which are symmetrical with respect to the diaphragm (2), and of substantially truncated shape, and in that said two conduits (3a, 3b) issue into their respective chamber by a widening-out portion (4a, 4b), which is substantially truncated and has the same conicity as said parts (21a, 21b), said truncated parts and portions being in axial alignment.

2. Shock-absorber according to claim 1, characterized in that each of said truncated parts (21a, 21b) of said piece (21) is extended axially by a centering protrusion (29a, 29b).

3. Shock-absorber according to claim 1 or claim 2, characterized in that said diaphragm (2) is provided, in its center, with an orifice (20) whose annular edge (19) is substantially plane and comprises on each of its faces a bead (19a, 19b) which is substantially semi-annular whereas the two parts (21a, 21b) of said piece comprise two plane faces (24, 26) one opposite the other, each one being provided with a semi-annular groove (27a, 27b) to receive said bead (19a, 19b), one of said parts forming a screw to be attached to the other forming nut through orifice (20) of the diaphragm by gripping between them the said beads.

4. Shock-absorber according to claim 3, characterized in that one of said parts (21a) has a radial shoulder (25) on which abuts the other part (21b), said shoulder being at a distance from plane face (26) of said part, which is substantially equal to the thickness of the flat edge of the diaphragm.

5. Shock-absorber according to any one of claims 3 and 4, characterized in that the diaphragm comprises an external annular edge (17) which is substantially plane and provided with beads (17a, 17b) for its fixation to the enclosure (1).

6. Shock-absorber according to claim 5, characterized in that said diaphragm (2) is in rubber (2b) and covered on its face directed towards hydraulic chamber (A) with a layer of plastic material (2a).

7. Shock-absorber according to claim 5 or claim 6, characterized in that the two plane portions (17 and 19) — internal and external portions — of the diaphragm (2) are joined together by a portion (18) of diaphragm which is substantially annular in the unstretched state.

8. Shock-absorber according to any one of the preceding claims, characterized in that the enclosure (1) is constituted by two half-shells (1a, 1b) between which are gripped the external beads (17a, 17b) of diaphragm (2), said conduit (3b) of connection with the auxiliary reserve (14) being constituted by an orifice traversing one of said half-shells (1b), said reserve (14) being constituted by a collar (9) surrounding said orifice and cooperating in tight manner with a base (11) by one of its ends and said half-shell (1a) by its other end, said base (11) and the other half-shell (1a) comprising means (5, 13, 7) of clamping the resulting stacked assembly.

Fig.1

0 078 721

# Fig. 2